# EUROPEAN PATENT SPECIFICATION

(11) **EP 3 214 277 B1**
(45) Date of publication and mention of the grant of the patent: **01.01.2020**
(21) Application number: 17157479.1
(22) Date of filing: 22.02.2017
(51) Int. Cl.: F01D 25/26, F01D 25/28, B64D 27/26

(54) **SYSTEMS FOR STIFFENING CASES ON GAS-TURBINE ENGINES**
SYSTEME ZUM VERSTEIFEN VON GEHÄUSEN AUF GASTURBINENMOTOREN
SYSTÈMES POUR RENFORCER DES BOÎTIERS SUR DES MOTEURS À TURBINE À GAZ

(30) Priority: 23.02.2016 US 201615051377
(43) Date of publication of application: 06.09.2017
(73) Proprietor: United Technologies Corporation, Farmington, CT 06032 (US)
(72) Inventor: WEBB, Scot A., Gales Ferry, CT 06335 (US)
(74) Representative: Dehns

(56) References cited:
- EP-A1- 2 930 307
- GB-A- 985 197
- GB-A- 2 388 161
- US-A1- 2011 176 918
- US-A1- 2012 093 639
- US-A1- 2016 010 502

## Description

### FIELD

The disclosure relates generally to gas turbine engines, and more particularly to the engine compressor case structure and maintaining tip clearances.

### BACKGROUND

Gas turbine engines include various rotating airfoil sections in which the tip clearance (e.g., the gap) between the blade tips and the case opposite the blade tips impacts engine performance. Variance in tip clearances and larger tip clearances designed to accommodate clearance fluctuation typically reduce engine performance in terms of stall margin, power output, and efficiency, for example.

As a result, compressors in gas turbine engines are dependent on controlling blade tip clearances to maintain compressor efficiency and operability. One aspect of controlling tip clearances is to minimize the out-of-round deflection of the compressor cases.

A prior art gas turbine engine having the features of the preamble to claim 1 is disclosed in EP 2,930,307.

### SUMMARY

The present invention provides a gas turbine engine in accordance with claim 1.

Typical gas turbine construction has the compressor case split flange oriented on a horizontal plane. In an engine where the engine thrust mount is situated vertically above the engine centerline, a split flange oriented on a horizontal plane will be on the neutral bending axis of the engine and will not influence the case bending stiffness nor out of round deflection. This invention orients the split flange in such an engine on the vertical plane, where by virtue of the parallel axis theorem of mechanics the flange will substantively increase the case stiffness for bending and will reduce out of round deflection.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates a cross sectional view of an exemplary gas turbine engine, in accordance with various embodiments;
FIG. 2 illustrates an exploded view of an engine case from forward looking aft, in accordance with various embodiments;
FIG. 3 illustrates a perspective view of a portion of an engine case half, in accordance with various embodiments; and
FIG. 4 illustrates a perspective view of an engine case having two halves with flanges aligned on a vertical plane, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosures, it should be understood that other embodiments may be realized within the scope of the appended claims.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

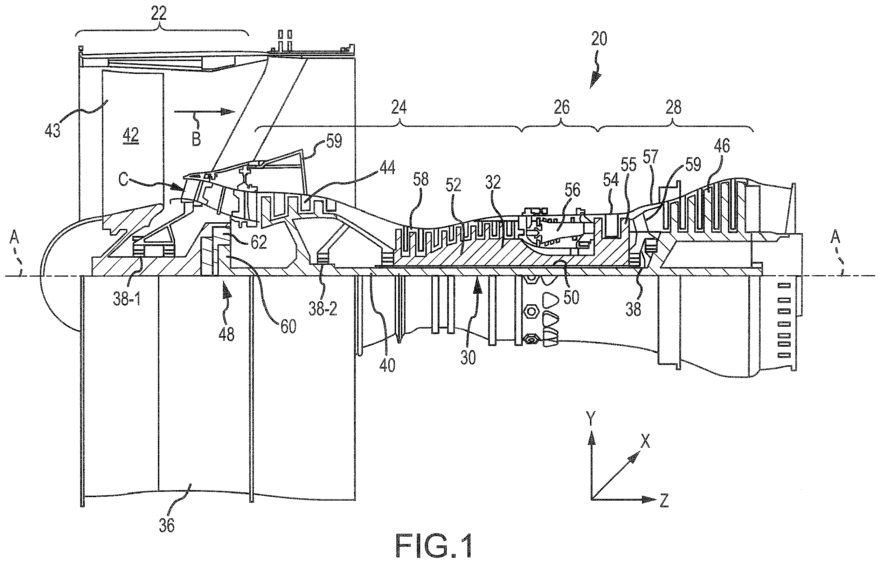

In various embodiments and with reference to FIG. 1, a gas-turbine engine 20 is provided. Gas-turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive the working fluid along a bypass flow-path B while compressor section 24 can drive the working fluid along a core flow-path C for compression and communication into combustor section 26 then expansion through turbine section 28. Although depicted as a two-spool turbofan gas-turbine engine 20 herein, it should be understood that the concepts described herein are not limited to use with two-spool turbofans as the teachings may be applied to other types of turbine engines including three-spool architectures.

Gas-turbine engine 20 may generally comprise a low speed spool 30 and a high speed spool 32 mounted for rotation about an engine central longitudinal axis A-A' relative to an engine static structure 36 via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2. In various embodiments, bearing system 38, bearing system 38-1, and bearing system 38-2 may be contained within a bearing housing and/or integrated into an oil delivery system, as described in further detail below.

Low speed spool 30 may generally comprise an inner shaft 40 that interconnects a fan 42, a low pressure (or first) compressor section 44 and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure (or second) compressor 52 and high pressure (or second) turbine 54. A combustor 56 may be located between high pressure compressor 52 and high pressure turbine 54.

A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by fan section 42 then low pressure compressor section 44 then high pressure compressor 52, mixed and burned with fuel in combustor 56, then expanded over high pressure turbine 54 and low pressure turbine 46. Turbines 46, 54 rotationally drive the respective low speed spool 30, fan 42, and high speed spool 32 in response to the expansion.

In various embodiments, engine static structure 36 may include a compressor case 58 (i.e., a split case disposed about high pressor compressor 52) disposed about a portion of compressor section 24. A portion of compressor case 58 is cutaway in FIG. 1 to illustrate components compressor section 24 retained within compressor case 58, however, compressor case 58 may circumferentially enclose at least a portion of compressor section 24 and provide structural support. Compressor case 58 may, for example, enclose high pressure compressor 52. Compressor case 58 may include one or more axial splits substantially parallel to axis A-A' (and the z axis as illustrated). The axial splits may be selectively oriented circumferentially to provide stiffening in a preferred plane. In typical top mounted engines (e.g., engines where the mounting point 59 is above axis A-A' in the y direction, as illustrated), the split is oriented vertically (e.g., with seams aligned in the y direction) to provide case stiffness. In such cases, engine mounting point 59 is a thrust mount located forward of high pressure compressor 52. The thrust mount (at mounting point 59) may be located at the top of the gas turbine engine. The top of the engine may be described as the side of the engine furthest from the ground while the aircraft is on the ground. In that regard, as explained in greater detail below, the seams and flanges of compressor case 58 are substantially aligned with mounting point 59 at the top of the engine.

Although aircraft and top-mounted engines are described in detail herein, various embodiments may include non-aircraft installations with varied mounting points. The split flanges on engine cases may be oriented relative to a moment applied to the engine to reduce out-of-round deflections. In traditional top-mounted aircraft installations the split flanges will typically thus be oriented in a vertical plane; however, non-vertical orientations may be appropriate in engines with varied mounting structures.

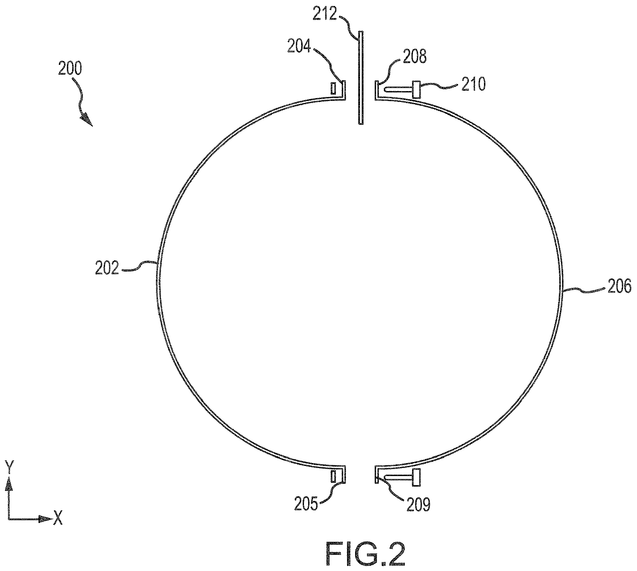

With reference to FIG. 2, an exploded view of an engine case 200 from forward looking aft is shown, in accordance with various embodiments. Engine case 200 may be, for example, a high-pressure-compressor case, a low-pressure-compressor case, a high-pressure-turbine case, or a low-pressure turbine case. Engine case 200 is an annular shaped structure having two or more portions. Engine case 200 may be configured to retain rotating turbomachinery. The circular profile of engine case 200 may encase or surround the rotational path of a rotating compressor or turbine blade about an engine centerline such as the axis A-A' in FIG. 1, for example. In that regard, engine case 200 may be substantially centered about the engine centerline.

Engine case 200 includes a first case 202 and a second case 206. The left half may include an upper flange 204 and a lower flange 205. The upper flange 204 and lower flange 205 may be located approximately 180° from one another. Stated another way, the upper flange 204 and lower flange 205 may be diametrically opposite one another. Upper and lower flanges may be upper and lower relative to the ground when a plane is on the runway. In that regard, an upper flange may be near the point of the engine furthest from the ground (e.g., near the top of the engine relative to the ground). A lower flange may be near the point of the engine closest to the ground while a plane is on the runway (e.g., near the bottom of the engine).

Upper flange 204 and lower flange 205 are oriented such that the engine mounting points (represented by mounting support location 212) are located axially from the upper flange 204 and diametrically opposite lower flange 205. Stated another way, upper flange 204 may be closer to engine mounting points in a circumferential direction than lower flange 205. In a typical engine installation, with engine mounting points at or near the top of the engine (e.g., the portion of the engine furthest from the ground) in the y direction, upper flange 204 and lower flange 205 are aligned in the vertical plane (i.e., the y-z plane). The flanges may thus be oriented at top-dead center and bottom-dead center of an engine case as viewed from the ground while a plane is on the runway.

Engine case 200 also includes second half 206. Second half 206 may have upper flange 208 and lower flange 209. Upper flange 208 is similar to upper flange 204. Lower flange 209 may also be similar to lower flange 205. Lower flange 209 may be pressed against lower flange 205 and upper flange 204 is pressed against upper flange 208. Fasteners 210 are passed through the upper flanges and the lower flanges to mechanically couple the first half 202 to the second half 206. The seam between the upper flanges is vertically aligned (e.g., in the y direction) with the seam between the lower flanges. Fasteners 210 may include rivets, bolts, or other suitable fasteners to couple the first half 202 and second half 206 along the flanges. In response to the flanges being mechanically coupled, engine case 200 forms an annulus.

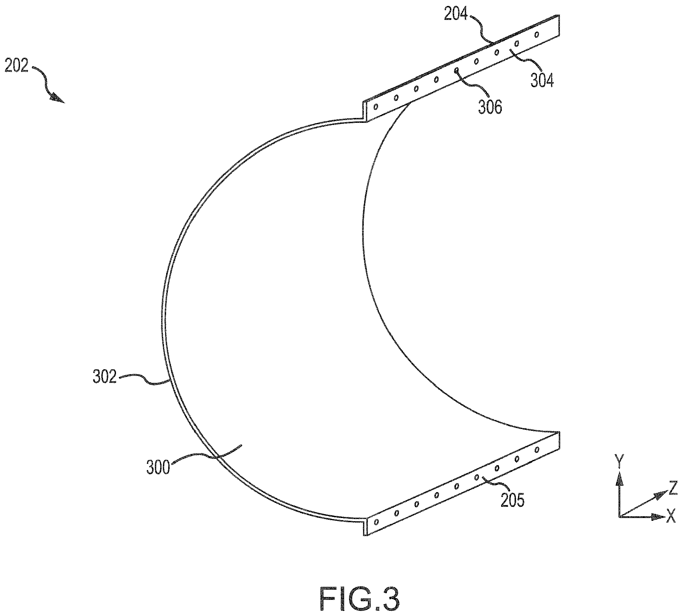

With reference to FIG. 3, a perspective view of first half 202 of engine case 200 is shown, in accordance with various embodiments. Although first half 202 is illustrated, second half 206 shares the same characteristics of first half 202 described herein. First half 202 of engine case 200 includes a semi-circular edge 302 in the x-y plane. A body of first half 202 of engine case 200 may extend aft from semi-circular edge 302 (e.g., in the z direction). Upper flange 204 and lower flange 205 extend in the z direction at the circumferential edges of semi-circular edge 302.

In various embodiments, upper flange 204 and lower flange 205 may be substantially rectangular and comprise mating surfaces 304 in the y-z plane. The flat mating surfaces extend the length of first half 202 in the z direction. Mating surface 304 of first half 202 are configured to mate with corresponding mating surfaces of second half 206. Mating surface 304 may define openings 306 configured to receive fasteners 210 from FIG. 2. Openings 306 in mating surface 304 may align with corresponding openings defined by the mating surface of second half 206. Referring briefly to FIG. 2, first half 202 and second half 206 may thus be pressed together in the x direction with the mating surface 304 of second half 202 aligned with the corresponding mating surface of first half 206.

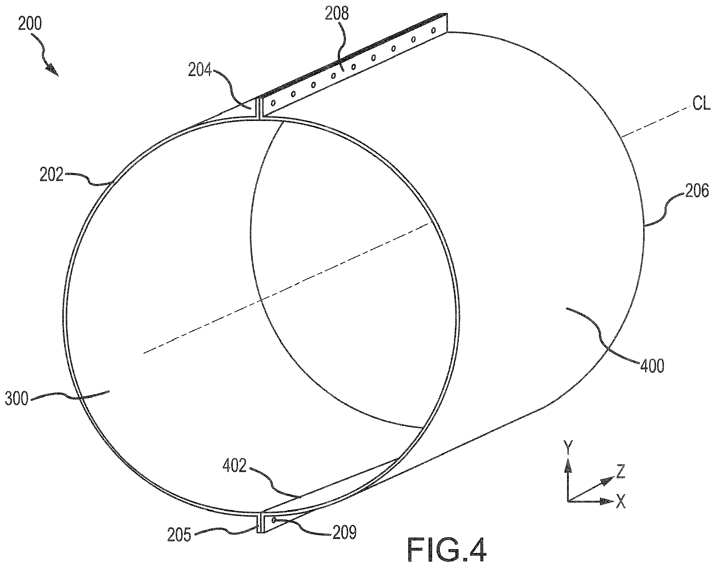

Referring now to FIG. 4, a perspective view of engine case 200 substantially centered about engine centerline CL with the potential for out-of-round deflection or other deflection resultant from engine operation. Body 300 of first half 202 and body 400 of second half 206 from the inner surface of the annular geometry with seam 402 between lower flange 205 and lower flange 209 substantially aligned in the y direction with the seam between upper flange 204 and upper flange 208. The engine mounting point is substantially aligned with the same vertical plane as the flange seams (i.e., the y-z plane). Substantially aligned, as used to describe circumferential alignment between engine mounting points and the flanges of engine case 200 such that the engine mounting points are within 15° of circumferential arc from upper flange 204, upper flange 208, lower flange 205, and/or lower flange 209, as measured from the engine centerline. Although substantially aligned circumferentially, as described above, the engine mounting points are offset from engine case 200 in an axial direction.

The axially oriented upper flanges and lower flanges of engine case 200 may serve as a pair of axial stiffening ribs on, for example, a high pressure compressor case. By orienting the flanges in the vertical plane, for example, on engines with top located mounting points, the flanges serve as stiffening ribs in the plane in which the thrust/thrust mount couple (i.e., mounting point 59 of FIG. 1) is applying a moment to the engine case 200. Flanges oriented thusly may increase the case moment of inertia and reduce both case bending and out-of-round deflection. As a result, tip clearance may be more stringently maintained, thereby improving engine performance. The vertically oriented flanges may further provide ease of access during maintenance and reduce the effort required to retrieve fallen items that might be retained in a horizontally split case.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A gas turbine engine (20) comprising:
a compressor section (24) configured to rotate about an axis (A-A);
a combustor (56) aft of the compressor section (24) and in fluid communication with the compressor section (24);
a turbine section (28) aft of the combustor (56) and configured to extract energy from combusted gas;
an engine case (200) disposed about a high pressure compressor of the compressor section (24), the engine case (200) comprising:
a first half (202) having a first semiannular geometry, with a first flange (204) located at a first circumferential edge of the first half (202);
a second half (206) having a second semiannular geometry, with a second flange (208) located at a second circumferential edge of the second half (206), wherein the second flange (208) is aligned with the first flange (204) and mechanically coupled to the first flange (204) using fasteners (210);
a third flange (205) located at a third circumferential edge of the first half (202); and
a fourth flange (209) located at a fourth circumferential edge of the second half (206), wherein the third flange (205) is aligned with the fourth flange (209) and mechanically coupled to the fourth flange (209) using fasteners;
a first seam defined by the first flange (204) and the second flange (208); and
a second seam (402) defined by the third flange (205) and the fourth flange (209), wherein the first seam is substantially vertically aligned with the second seam (402),
wherein the engine case (200) comprises an annular geometry; and
wherein the first flange (204) and the second flange (208) extend axially along the first half (202) and the second half (206) respectively to define corresponding first mating surfaces (304) that extend the axial length of the first half (202) and the second half (206), respectively; **characterised by**
an engine mounting point (212) disposed on the gas turbine engine (20);
wherein the engine mounting point (212) is axially forward of the engine case (200); and wherein the engine mounting point (212) is substantially aligned with the same vertical plane as the first and second seams (402).

2. The gas turbine engine of claim 1, wherein the first mating surfaces (304) and an engine centerline (cl) are coplanar.

3. The gas turbine engine of claim 1 or 2, wherein the third flange (205) defines a second mating surface, wherein the second mating surface and the first mating surfaces (304) are coplanar.

## Patentansprüche

1. Gasturbinenmotor (20), umfassend:
einen Verdichterabschnitt (24), der konfiguriert ist, um sich um eine Achse (A-A) zu drehen;
eine Brennkammer (56) hinter dem Verdichterabschnitt (24) und in Fluidkommunikation mit dem Verdichterabschnitt (24);
einen Turbinenabschnitt (28) hinter der Brennkammer (56) und konfiguriert, um Energie aus verbranntem Gas zu gewinnen;
ein Motorgehäuse (200), das um einen Hochdruckverdichter des Verdichterabschnitts (24) angeordnet ist,
wobei das Motorgehäuse (200) Folgendes umfasst:
eine erste Hälfte (202), die eine erste halbringförmige Geometrie aufweist, wobei ein erster Flansch (204) an einer ersten Umfangskante der ersten Hälfte (202) angeordnet ist;
eine zweite Hälfte (206), die eine zweite halbringförmige Geometrie aufweist, wobei ein zweiter Flansch (208) an einer zweiten Umfangskante der zweiten Hälfte (206) angeordnet ist, wobei der zweite Flansch (208) mit dem ersten Flansch (204) ausgerichtet und unter Verwendung von Befestigungsmitteln (210) mechanisch an den ersten Flansch (204) gekoppelt ist;
einen dritten Flansch (205), der an einer dritten Umfangskante der ersten Hälfte (202) angeordnet ist; und
einen vierten Flansch (209), der an einer vierten Umfangskante der zweiten Hälfte (206) angeordnet ist, wobei der dritte Flansch (205) mit dem vierten Flansch (209) ausgerichtet und unter Verwendung von Befestigungsmitteln mechanisch an den vierten Flansch (209) gekoppelt ist;
eine erste Naht, die durch den ersten Flansch (204) und den zweiten Flansch (208) definiert ist; und
eine zweite Naht (402), die durch den dritten Flansch (205) und den vierten Flansch (209) definiert ist, wobei die erste Naht im Wesentlichen vertikal mit der zweiten Naht (402) ausgerichtet ist,
wobei das Motorgehäuse (200) eine ringförmige Geometrie umfasst; und
wobei sich der erste Flansch (204) und der zweite Flansch (208) jeweils axial entlang der ersten Hälfte (202) und der zweiten Hälfte (206) erstrecken, um entsprechende erste Berührungsflächen (304) zu definieren, die jeweils die axiale Länge der ersten Hälfte (202) und der zweiten Hälfte (206) überspannen; **gekennzeichnet durch**
eine Motorlagerstelle (212), die an dem Gasturbinenmotor (20) angeordnet ist;
wobei die Motorlagerstelle (212) axial vor dem Motorgehäuse (200) liegt; und wobei die Motorlagerstelle (212) im Wesentlichen mit derselben vertikalen Ebene ausgerichtet ist wie die erste und zweite Naht (402).

2. Gasturbinenmotor nach Anspruch 1, wobei die ersten Berührungsflächen (304) und eine Motormittellinie (cl) koplanar sind.

3. Gasturbinenmotor nach Anspruch 1 oder 2, wobei der dritte Flansch (205) eine zweite Berührungsfläche definiert, wobei die zweite Berührungsfläche und die ersten Berührungsflächen (304) koplanar sind.

## Revendications

1. Moteur à turbine à gaz (20) comprenant :
une section de compresseur (24) configurée pour tourner autour d'un axe (A-A) ;
une chambre de combustion (56) à l'arrière de la section de compresseur (24) et en communication fluidique avec la section de compresseur (24) ;
une section de turbine (28) à l'arrière de la chambre de combustion (56) et configurée pour extraire de l'énergie du gaz issu d'une combustion ;
un boîtier de moteur (200) disposé autour d'un compresseur haute pression de la section de compresseur (24), le boîtier de moteur (200) comprenant :
une première moitié (202) ayant une première géométrie semi-annulaire, avec une première bride (204) située au niveau d'un premier bord circonférentiel de la première moitié (202) ;
une seconde moitié (206) ayant une seconde géométrie semi-annulaire, avec une deuxième bride (208) située au niveau d'un deuxième bord circonférentiel de la seconde moitié (206), dans lequel la deuxième bride (208) est alignée avec la première bride (204) et mécaniquement couplée à la première bride (204) à l'aide d'éléments de fixation (210) ;
une troisième bride (205) située au niveau d'un troisième bord circonférentiel de la première moitié (202) ;
une quatrième bride (209) située au niveau d'un troisième bord circonférentiel de la seconde moitié (206), dans lequel la troisième bride (205) est alignée avec la quatrième bride (209) et mécaniquement couplée à la quatrième bride (209) à l'aide d'éléments de fixation ;
une première couture définie par la première bride (204) et la deuxième bride (208) ; et
une seconde couture (402) définie par la troisième bride (205) et la quatrième bride (209), dans lequel la première couture est alignée de manière sensiblement verticale avec la seconde couture (402),
dans lequel le boîtier de moteur (200) comprend une géométrie annulaire ; et
dans lequel la première bride (204) et la deuxième bride (208) s'étendent axialement le long de la première moitié (202) et de la seconde moitié (206) respectivement pour définir des premières surfaces d'accouplement correspondantes (304) qui s'étendent sur la longueur axiale de la première moitié (202) et de la seconde moitié (206), respectivement ;
**caractérisé par**
un point de montage de moteur (212) disposé sur le moteur à turbine à gaz (20) ;
dans lequel le point de montage de moteur (212) est situé axialement à l'avant du boîtier de moteur (200) ; et dans lequel le point de montage de moteur (212) est sensiblement aligné avec le même plan vertical que les première et seconde coutures (402).

2. Moteur à turbine à gaz selon la revendication 1, dans lequel les premières surfaces d'accouplement (304) et une ligne centrale de moteur (cl) sont coplanaires.

3. Moteur à turbine à gaz selon la revendication 1 ou 2, dans lequel la troisième bride (205) définit une seconde surface d'accouplement, dans lequel la seconde surface d'accouplement et les premières surfaces d'accouplement (304) sont coplanaires.
